# EUROPEAN PATENT APPLICATION

(11) **EP 4 451 782 A1**
(43) Date of publication of application: **23.10.2024**
(21) Application number: 24171197.7
(22) Date of filing: 19.04.2024
(51) Int. Cl.: H04W 72/21, H04L 5/00

(54) **PUCCH FORMAT 3 RESOURCE ALLOCATION AND SCHEDULING**

(30) Priority: 21.04.2023 US 202363497459 P; 17.04.2024 US 202418637611
(71) Applicant: Mavenir Systems, Inc., Richardson, TX 75081 (US)
(72) Inventor: Leelahakriengkrai, Rangsan, Allen, 75013 (US)
(74) Representative: Studio Torta S.p.A.

(57) **Abstract**

A system for optimizing Physical Uplink Control Channel (PUCCH) Format 3 resource assignment in 4G Radio Access Network (RAN) includes: a Layer 3 (L3) Radio Resource Control (RRC) module configured to selectively configure four PUCCH Format 3 resources for each one of user equipments (UEs) which attach or hand-in to a serving cell of the RAN, the L3 RRC module configuring the four PUCCH Format 3 resources from a PUCCH Format 3 UE-configuration lookup table structured to balance the number of assignments to each of ten PUCCH Format 3 resources; and a Layer 2 (L2) Media Access Control (MAC) Scheduler configured to selectively reserve one of PUCCH Format 1 resource or PUCCH Format 3 resource depending on buffer occupancy (BO), the selective reservation of PUCCH Format 3 resource being accompanied by updating an L2 Format 3 Reserved bitmap to track the PUCCH Format 3 resources in a Bundling Period.

## Description

### BACKGROUND OF THE DISCLOSURE

### 1. Field of the Disclosure

The present disclosure relates to radio access network (RAN) configuration, and relates more particularly to 4G RAN networks utilizing Physical Uplink Control Channel (PUCCH) Format 3 Resource Assignment on both Layer 2 (Media Access Control (MAC)) and Layer 3 (Radio Resource Control (RRC)).

### 2. Description of the Related Art

PUCCH) format 3 is used to feedback Hybrid Automatic Repeat Request Acknowledgement (HARQ-ACK) to the eNB for both the primary cell (PCell) and the secondary cell(s) (SCell(s)) for Carrier Aggregation (CA) user equipments (UEs). There are 5 PUCCH format 3 resources per Resource Block (RB) (separated by 5 orthogonal codes). The allocation is even number of RBs, so the minimum allocation is 2 RBs (or 10 resources).

The RRC layer will assign 4 values to a new UE (attaching or handing-in) to the cell, as per 3GPP standard. Before the UE is to be scheduled for the Carrier Aggregation (CA) in both the PCell and the SCell, the UE needs to reserve a PUCCH format 3 resource, so the UE will pick one of the 4 RRC-configured values. Once the UE selects one of the 4 RRC-configured values, that selected resource cannot be used by other UEs scheduled on the same Bundling Period. The simplest way to operate would be to only have 10 CA UEs where each UE will have its own PUCCH format 3 resource. The scheduled UE can pick the first value and it is always available.

However, the above-described operation yields a very low CA capacity because, out of Time Division Duplex (TDD) 200 UEs, only 10 UEs can use CA. Increasing the number of RBs for PUCCH format 3 is not desirable because the PUCCH is the overhead and the RB for format 1 and format 2 have been already high. Higher overhead will lower the Uplink (UL) throughput.

Therefore, a need exists to provide a system and a method for a PUCCH format 3 resource allocation that maximizes the TDD CA, e.g., to 200 UEs, without negatively impacting the performance.

### SUMMARY OF THE DISCLOSURE

The present disclosure provides a system and a method for a PUCCH format 3 resource allocation that maximizes the TDD CA, e.g., to 200 UEs, without negatively impacting the performance.

In an example embodiment of a method according to the present disclosure, the PUCCH format 3 resource allocation method is structured to increases the TDD CA capacity from 10 to 200 UEs, e.g., by utilizing: Layer 3 RRC; Layer 2 MAC Scheduler; and Layer 2 Reserve PUCCH Format 3 sub-routine, which can be implemented by the respective controllers or modules within the eNB (or base station).

According to an example embodiment of a method, Layer 3 RRC module performs the following:
i) Configures 4 PUCCH Format 3 resources for the UE after it attaches or hands-in to the cell from the first available entry in L3 PUCCH Format 3 Allocation Lookup Table, that is generated from the Load Balancing with Fixed Value in the First Resource.
ii) Includes the 4 PUCCH Format 3 resources for the UE in the RRC Configuration message to the UE.
iii) If the UE is departing the cell (detaching or handing out), then makes its entry in the Lookup Table available for some other new UE.

According to an example embodiment, L2 MAC Scheduler performs the following:
i) In each sub-frame/slot, ranks both non-CA and CA UEs based on Proportional Fair Scheduling or another selected scheme.
ii) Checks whether the next UE is the CA UE, and if so, checks whether Buffer Occupancy (BO) is sufficient to be split to both PCell and SCell (BO indicates the amount of data that is currently queued for transmission (or retransmission) in Radion Link Control (RLC) layer).
   a. If so, PUSCH on both PCell and SCell, and proceed to Reserve PUCCH Format 3 sub-routine.
   b. If not, PUSCH on PCell only, and reserve PUCCH Format 1.
iii) If the Reserve PUCCH Format 3 sub-routine cannot assign Format 3 (e.g., due to resource blocking) for the CA UE, skip that CA UE and go to the next one, and repeat until no more UE is left to schedule, the number of scheduled UEs reaches the specified limit, or no more Format 3 resource remains.

According to an example embodiment, Layer 2 Reserve PUCCH Format 3 sub-routine performs the following:
i) Maintains the L2 Format-3 Reserved bitmap or table to track the PUCCH Format 3 in a Bundling Period.
ii) If the UE has been scheduled in the previous DL sub-frame (sf) in the same TDD Bundling Period, uses the same PUCCH Format 3 resource; if not, reserve a new PUCCH Format 3 resource in order from one of the 4 values configured by the RRC.
iii) If the resource is available, then reserves it and update the L2 Format-3 Reserved bitmap, and goes back to the Scheduler with the successful result; if not, goes back to the Scheduler with the unsuccessful result.

### BRIEF DESCRIPTION OF THE DRAWINGS

FIG. 1 is a table listing the mapping of values of "Transmit Power Control (TPC) command for Physical Uplink Control Channel (PUCCH)" field used to determine the PUCCH resource values from one of the four resource values configured by higher layers.
FIG. 2 illustrates an example of two bundling periods in time division duplex (TDD) Configuration 2.
FIG. 3 illustrates a "staggering" method of assigning resources to 10 different UEs.
FIG. 4 illustrates application of the "staggering" method to 20 UEs.
FIG. 5 shows the graph of results from a simulation comparing the blocking probabilities of three different methods.
FIG. 6 is a flowchart of an example L3 method according to the present disclosure.
FIGS. 7a-7h illustrate the look-up table of Format 3 resource assignments according to an example method.
FIG. 8a illustrates an example L2 method according to the present disclosure.
FIG. 8b illustrates an example UE selection sub-routine within the L2 method.
FIG. 8c illustrates an example "reserve PUCCH Format 3" sub-routine within the UE selection sub-routine.

### DETAILED DESCRIPTION

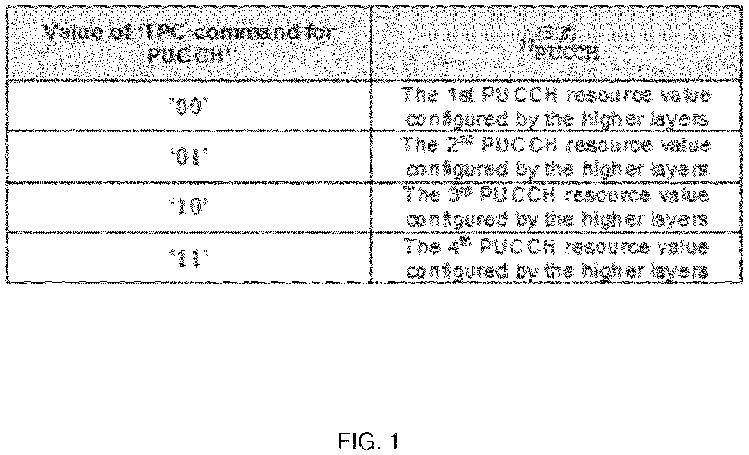

FIG. 1 is a table listing the mapping of values of "Transmit Power Control (TPC) command for Physical Uplink Control Channel (PUCCH)" field (left column, with values 00, 01, 10 and 11) used to determine the PUCCH resource values (for HARQ-ACK resource for PUCCH) from one of the four resource values configured by higher layers (right column). Accordingly, FIG. 1 illustrates four potential resource assignments for each UE.

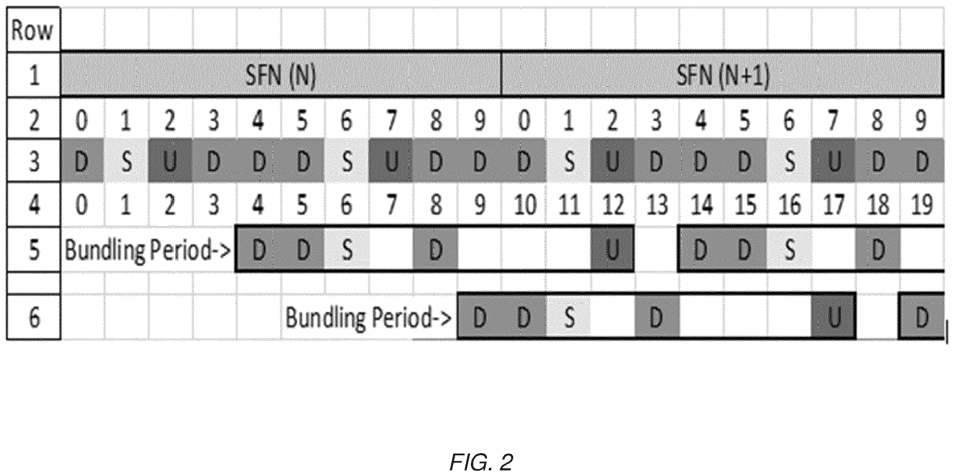

FIG. 2 illustrates an example of two bundling periods in time division duplex (TDD) Configuration 2. Shown in FIG. 2 are two system frame numbers (SFNs), i.e., SFN (N) and SFN (N+1), with each SFN containing 10 subframes (sf's), and the two bundling periods are shown in rows 5 and 6. There are 4 corresponding DL sf's (3 reserved for DL, each designated D, and one special sf, designated S, which includes DL symbols called downlink pilot time slot (DwPTS), so effectively 4 DL sf's are provided) in each bundling period for the earliest UL sf. The UE that transmits PDSCH in one of these DL sfs on both PCell and SCell must use a PUCCH format 3 resource in the earliest UL sf; otherwise, it cannot be scheduled.

If two CA UEs choose the same Format 3 resource value, this would cause a blocking for one CA UE, which cannot find the Format 3 resource value to use, so it cannot be scheduled in any of the 4 downlink (DL) subframes (sfs) in the same bundling period. The blocked CA UE will have to choose another resource value among its 4 configured resource values or be scheduled in the next bundling period.

The following should be noted regarding TPC on PCell and SCell. In accordance with 3GPP TS 36.213, if the Transmit Power Control (TPC) command is used to signal a PUCCH Format 3 resource among the 4 configured resource values for the UE, then the TPC command is not used to perform power control. The TPC command is used to signal a PUCCH Format 3 resource when both the PCell and the SCell are transmitted in the same Transmission Time Interval (TTI) in one of the DL sfs in the bundling period. Once the PUCCH Format 3 resource is signaled, then this resource will be used in all subsequent PCell, SCell, or both Physical Downlink Shared Channel (PDSCH) in the same bundling period, i.e., if the UE has more data to transmit, then the UE will use the same PUCCH Format 3 resource to send HARQ-ACK. IF only PCell (but no SCell) is used to transmit in the bundling period, then it will use Format 1a/1b.

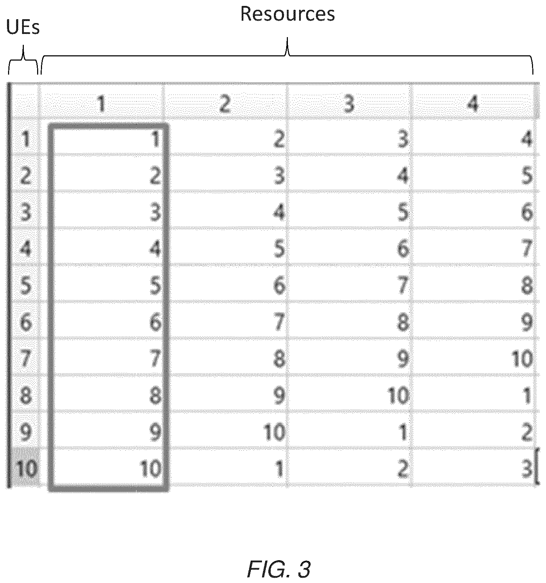

One simple method of assigning resources to different UEs is to use a different resource index for each UE. For example, in the "staggering" method, which is illustrated in FIG. 3, UE 1 uses index 1 on its first resource, UE 2 uses index 2 on its first resource, UE 3 uses index 3 on its first resource, etc., and each UE sequentially increments the index values for the remaining resources. As shown in FIG. 3, UE 1 is assigned indices 1-4 for resources 1-4; UE 2 is assigned indices 2-5 for resources 1-4; UE 3 is assigned indices 3-6 for resources 1-4, etc. If the number of UEs is less than or equal to the total resources, e.g., 10, by simply setting the TPC='00' (i.e., picking the first PUCCH resource value), then all UE's can be scheduled.

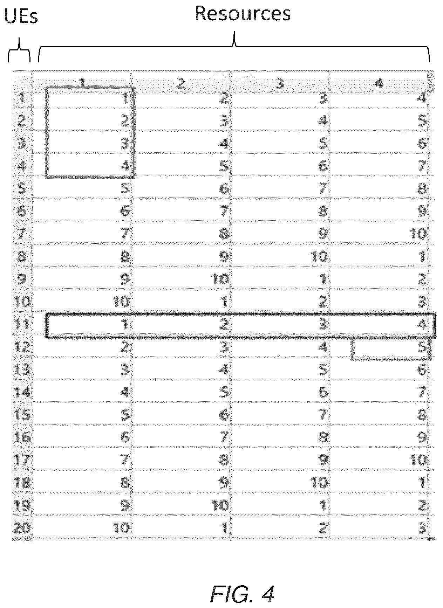

FIG. 4 illustrates a scenario in which there are 20 CA UEs, and the "staggering" algorithm is once again applied. In the scenario illustrated in FIG. 4, if the Scheduler picks UEs 1-4 first, and UEs 1-4 choose format 3 resource IDs 1-4, respectively, then UE 11 cannot be scheduled because all resources 1-4 are taken, thereby resulting in a "blocking" situation, which means the Scheduler needs to skip UE 11. If UE 12 is next in the scheduling list (e.g., ranked by the priority factor (PF) priority), it can be picked using ID 5. However, this will violate the PF priority among the UE's, thereby creating a problem. If we expand the number of UEs to 200 UEs for a hypothetical scenario, the following questions are raised: i) how many times would such blocking occur (or what is the blocking probability)?; and ii) how can the resource configuration be structured such that the blocking probability is reduced?

In an example embodiment of a method according to the present disclosure, the PUCCH format 3 resource allocation method is structured to increases the TDD CA capacity from 10 to 200 UEs, e.g., by utilizing: Layer 3 RRC; Layer 2 MAC Scheduler; and Layer 2 Reserve PUCCH Format 3 sub-routine, as described herein.

According to an example embodiment of a method, Layer 3 RRC performs the following:
iv) Configures 4 PUCCH Format 3 resources for the UE after it attaches or hands-in to the cell from the first available entry in L3 PUCCH Format 3 Allocation Lookup Table, that is generated from the Load Balancing with Fixed Value in the First Resource.
v) Includes the 4 PUCCH Format 3 resources for the UE in the RRC Configuration message to the UE.
vi) If the UE is departing the cell (detaching or handing out), then makes its entry in the Lookup Table available for some other new UE.

According to an example embodiment of a method, L2 MAC Scheduler performs the following:
iv) In each sub-frame/slot, ranks both non-CA and CA UEs based on Proportional Fair Scheduling or another selected scheme.
v) Checks whether the next UE is the CA UE, and if so, checks whether Buffer Occupancy (BO) is sufficient to be split to both PCell and SCell.
   a. If so, PUSCH on both PCell and SCell, and proceed to Reserve PUCCH Format 3 sub-routine.
   b. If not, PUSCH on PCell only, and reserve PUCCH Format 1.
vi) If the Reserve PUCCH Format 3 sub-routine cannot assign Format 3 (e.g., due to resource blocking) for the CA UE, skip that CA UE and go to the next one, and repeat until no more UE is left to schedule, the number of scheduled UEs reaches the specified limit, or no more Format 3 resource remains.

According to an example embodiment of a method, Layer 2 Reserve PUCCH Format 3 sub-routine performs the following:
iv) Maintains the L2 Format-3 Reserved bitmap or table to track the PUCCH Format 3 in a Bundling Period.
v) If the UE has been scheduled in the previous DL sub-frame (sf) in the same TDD Bundling Period, uses the same PUCCH Format 3 resource; if not, reserve a new PUCCH Format 3 resource in order from one of the 4 values configured by the RRC.
vi) If the resource is available, then reserves it and update the L2 Format 3 Reserved bitmap, and goes back to the Scheduler with the successful result; if not, goes back to the Scheduler with the unsuccessful result.

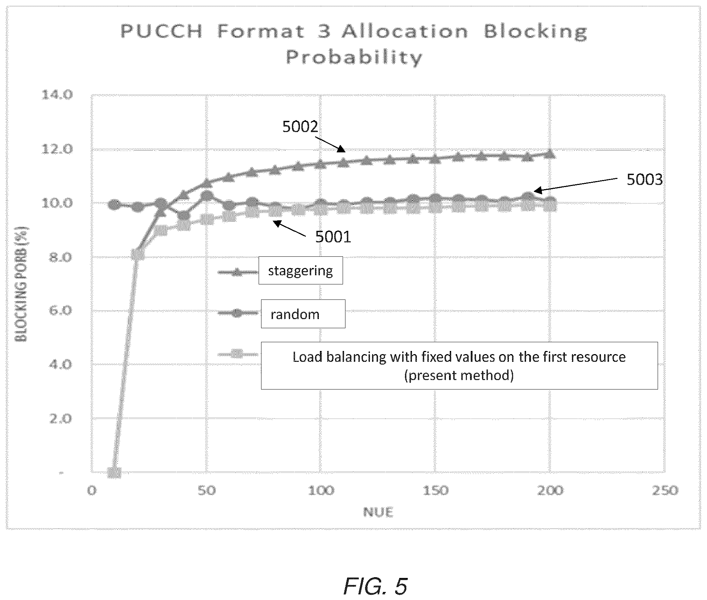

The example method according to the present disclosure enables Format 3 resource assignments to at least 200 UEs based on 2 PRBs of PUCCH Format 3, with blocking probability of less than 10%. FIG. 5 shows the graph of results from a simulation comparing the blocking probabilities of three different methods: i) the example method according to the present disclosure (i.e., load balancing with fixed values on the first resource), referenced by 5001; staggering assignment, referenced by 5002; and random assignment, referenced by 5003. The graph of FIG. 5 illustrates that when there were small number of UEs (less than 10 in this example), the blocking probabilities were zero for both the example method according to the present disclosure and the staggering assignment, but the random assignment did not provide this feature. When there were more users, the blocking probability for the example method according to the present disclosure converged to less than 10%, while the random assignment method's blocking probability converged to about 10%. The staggering assignment method's blocking probability converged to a higher percentage, because the staggering assignment does not create enough randomness. The example method according to the present disclosure provides good performances for both small and large numbers of UEs.

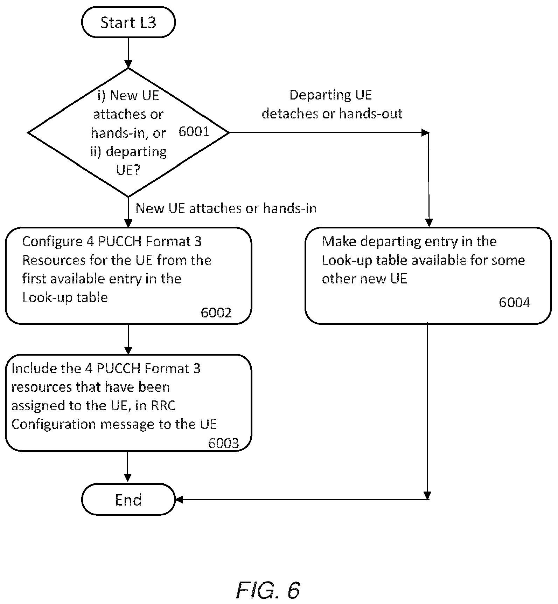

In an example embodiment, the following L3 RRC method is implemented (e.g., by an L3 RRC controller), which will be described in connection with FIG. 6. As shown in the box 6001, L3 RRC controller determines whether i) a new UE attaches or hands-in (handover from another cell) to the present cell, or ii) a UE is departing the cell (detaching or handing out). If a new UE attaches or hands-in to the cell, the L3 RRC controller configures 4 PUCCH Format 3 resources for the UE, e.g., from the first available entry of the L3 PUCCH Format 3 Allocation Lookup Table, as shown in the box 6002. If a UE is departing the cell (detaching or handing out), the L3 RRC controller makes the entry of the departing UE in the L3 PUCCH Format 3 Allocation Lookup Table available to some other new UE. Next, as shown in the box 6003, the L3 RRC controller includes the 4 PUCCH Format 3 resources that have been assigned to the UE in the RRC Configuration message to the UE, in accordance with 3GPP standard TS 36.331. As specified in 3GPP TS 36.331, PUCCH-Config information element (IE) and (if the UE supports 3GPP Release 10.20) PUCCH-ConfigDedicated-v1020 IE can be used, each of which IEs includes the following parameters:
n3PUCCH-AN-List-r10 SEQUENCE (SIZE (1..4)) OF INTEGER (0..549) OPTIONAL, -- Need ON
i) The n3PUCCH-AN-List-r10 is a list containing up to 4 PUCCH Format 3 resources that can be sent to the UE in accordance with the example method of the present disclosure, i.e., these 4 PUCCH Format 3 resources are included in the RRC messages by configuring the parameter n3PUCCH-AN-List-r10.
ii) The SEQUENCE (SIZE (1..4)) OF INTEGER (0..549) indicates that this is a list (SEQUENCE), with size up to 4 (1..4) of INTEGER value (from 0..549).
iii) OPTIONAL means it is optional for the eNB to send to the UE.
iv) Need ON means "Optionally present, No action (for the UE to do anything). An information element that is optional to signal. If the message is received by the UE, and in case the information element is absent, the UE takes no action and where applicable shall continue to use the existing value (and/ or the associated functionality)."

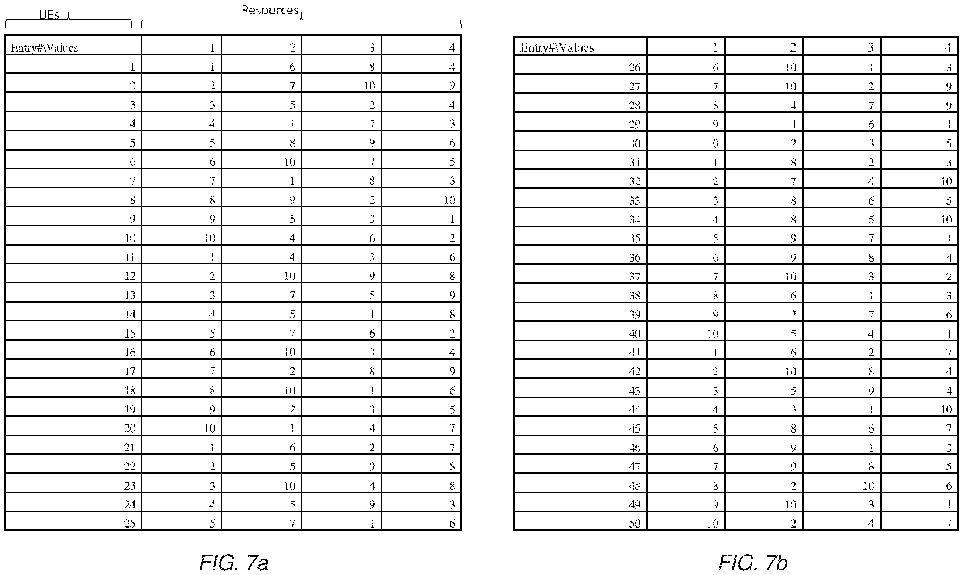

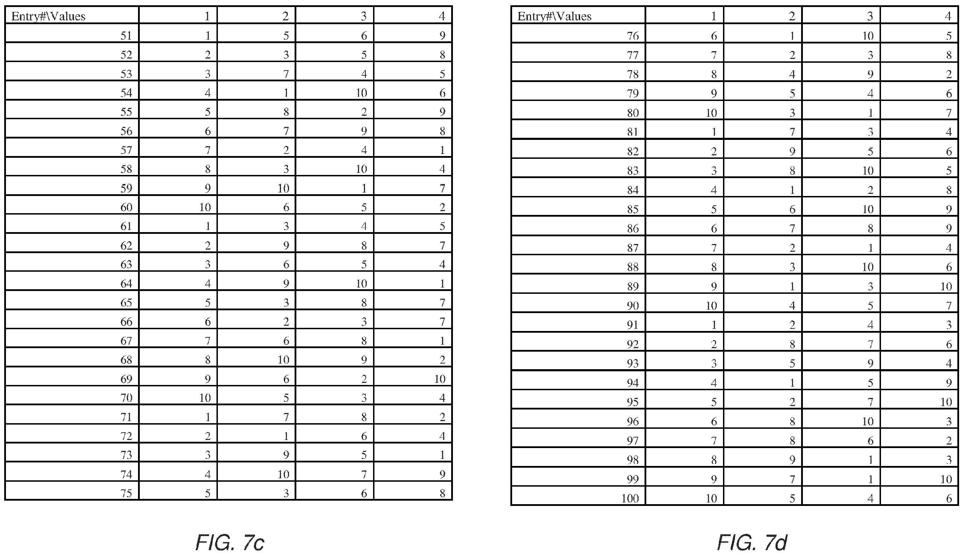

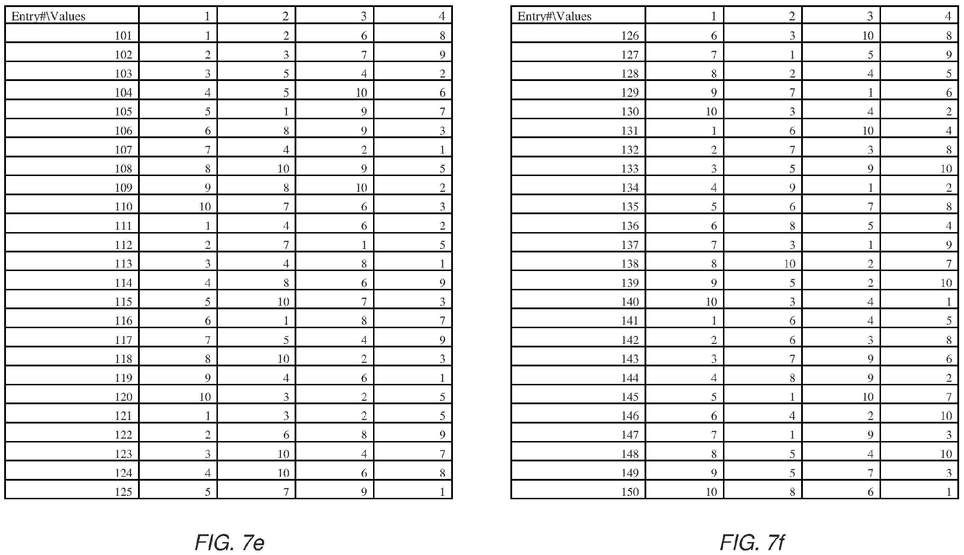

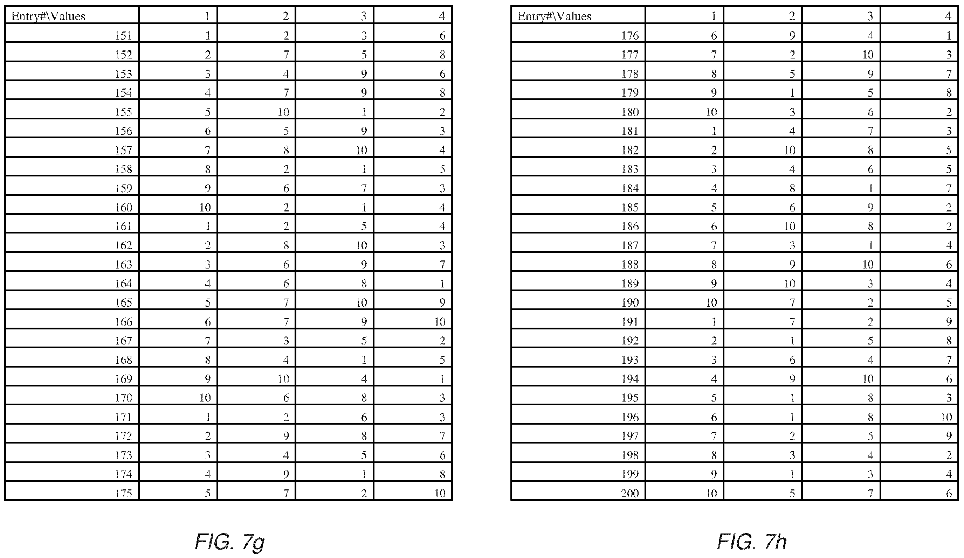

In this section, PUCCH Format 3 UE-configuration lookup table (illustrated in FIGS. 7a-7h) will be described. This lookup table is generated by using a method incorporating load balancing with random tiebreaker, and fixed values (1 through 10) assigned to the first resource of each set of 10 sequential entries for UEs. For each UE (entries listed in the left-most column in FIGS. 7a-7h), there are 4 possible resources values that can be configured (even though there are 10 PUCCH Format 3 resources, each UE can pick only four), which are shown in the second through fifth columns in FIGS. 7a-7h. For example, if UE 1 picks table entry 1 in FIG. 7a, then RRC will configure resource IDs 1, 6, 8 and 4 to the UE. Similarly, the next UE, UE 2, can be assigned the table entry 2 with resource IDs 2, 7, 10 and 9.

The PUCCH Format 3 UE-configuration lookup table illustrated in FIGS. 7a-7h is structured to balance the number of assignments to each of the 10 PUCCH Format 3 resources. This is part of the load balancing aspect with tiebreaker. In the first 10 entries (rows), there are exactly 4 assignments of resource "1", 4 assignments of resource "2", 4 assignments of resource "3", and so on. The lookup table is structured such that, for each sequentially additional entry, the resource assignment is designed to balance the number of assignments to each of the 10 resources. In addition, the first resource of each set of 10 sequential entries is configured in ascending order (i.e., 1 through 10), thereby ensuring that when there are less than 10 UEs in the system, all the UEs will have their own resources without any blocking. The PUCCH Format 3 UE-configuration lookup table illustrated in FIGS. 7a-7h is structured for up to 200 CA UEs (and with 10 PUCCH Format 3 resources), but the table can be expanded to include additional entries to accommodate additional UEs.

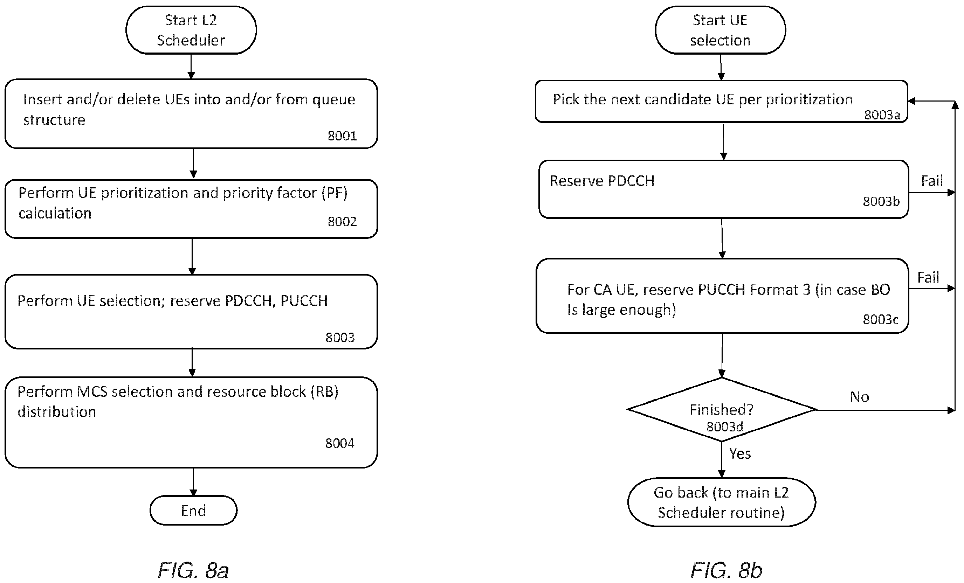

In this section, the overall example L2 method including the L2 Scheduler implementation and the L2 Reserve PUCCH Format 3 implementation will be described in connection with FIGS. 8a-8c. First, FIG. 8a illustrates the overall example L2 method. As shown in box 8001, the L2 Scheduler inserts UEs into and/or deletes UEs from the queue structure. Next, as shown in box 8002, the L2 Scheduler performs UE prioritization and priority factor (PF) calculation, i.e., the L2 Scheduler ranks both non-CA and CA UEs based on PF. As shown in box 8003, the L2 Scheduler performs UE selection, with accompanying reservation of PDCCH and PUCCH (an expanded, detailed flowchart of block 8003 of FIG. 8a is shown in FIG. 8b, which will be explained in the below paragraph). As shown in box 8004, the L2 Scheduler performs MCS selection and RB distribution, which ends the example L2 method.

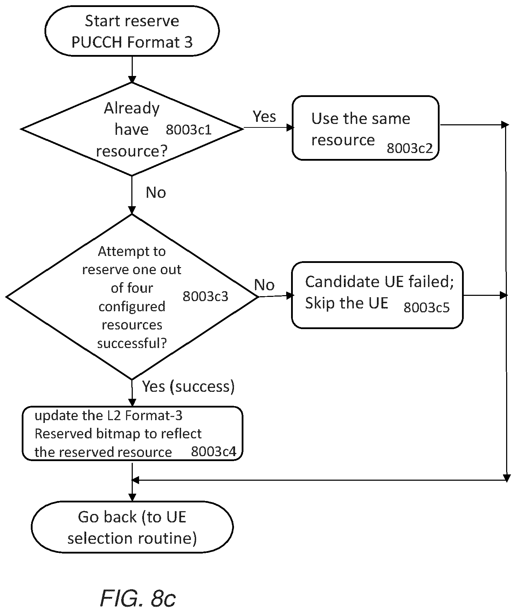

The detailed flowchart of block 8003 of FIG. 8a is shown in FIG. 8b and described in detail here. As shown in box 8003a of FIG. 8b, the L2 Scheduler selects the next candidate UE per prioritization. The L2 Scheduler checks whether the next candidate UE is a CA UE or not. If the candidate UE is a non-CA UE, the L2 Scheduler i) allocates PDSCH on PCell only, ii) reserves PDCCH (as generally shown in box 8003b in FIG. 8b) on the PCell, and iii) reserves PUCCH Format 1. If the candidate UE is a CA UE, the L2 Scheduler checks whether the BO is large enough to allocate PDSCH on both PCell and SCell. If the BO is small, the L2 Scheduler i) allocates PDSCH on PCell only, ii) reserves PDCCH (as generally shown in box 8003b in FIG. 8b) on the PCell, and iii) reserves PUCCH Format 1. If the BO is large enough, the L2 Scheduler i) allocates PDSCH on both PCell and SCell, ii) reserves PDCCH (as generally shown in box 8003b in FIG. 8b) for both PCell and SCell, and iii) go to Reserve PUCCH Format 3 implementation (which is explained in detail below as a sub-routine, in connection with the flowchart illustrated in FIG. 8c). The steps 8003a, 8003b and 8003c are repeated until there are no more UEs to schedule, the number of scheduled UE's reaches the set limit or no more Format 3 resources available, i.e., the answer to the decision block 8003d ("Finished?") is YES.

In this section, the Reserve PUCCH Format 3 sub-routine (corresponding to box 8003c shown in FIG. 8b) will be explained in detail in connection with the flowchart of FIG. 8c. The L2 Scheduler maintains (updates) the L2 Format 3 Reserved bitmap (table) to track the PUCCH Format 3 resources in a Bundling Period. If the UE has been scheduled in the previous DL sf in the same TDD Bundling Period (i.e., already have resource, so YES answer to block 8003c1 in FIG. 8c), the L2 Scheduler uses the same PUCCH Format 3 resource (block 8003c2 in FIG. 8c). If the UE has not been scheduled in the previous DL sf in the same TDD Bundling Period (i.e., NO answer to block 8003c2), the L2 Scheduler attempts to reserve a new resource from one of the 4 resources configured by the RRC. If the resource is available, then the resource is successfully reserved, and the L2 Scheduler updates the L2 Format-3 Reserved bitmap, as shown in box 8003c4 in FIG. 8c. At this point, the method sequence goes back to the UE selection method sequence shown in FIG. 8b. If the L2 Scheduler cannot assign a Format 3 resource (e.g., resource unavailable due to resource blocking), the L2 Scheduler skips that UE (as a failed candidate UE) as shown in box 8003c5, and performs the following: cancels the reservation of the PDCCH on both PCell and SCell; cancels the allocation of PDSCH on both PCell and SCell; and goes to the next candidate UE. This process is repeated until there are no more UEs to schedule, the number of scheduled UEs reaches the set limit, or no more Format 3 resources are available.

The techniques described herein are exemplary and should not be construed as implying any limitation on the present disclosure. Various alternatives, combinations and modifications could be devised by those skilled in the art. For example, operations associated with the processes described herein can be performed in any order, unless otherwise specified or dictated by the operations themselves. The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

For the sake of completeness, the following list of acronyms is provided:

### Acronyms

- BO: Buffer Occupancy
- CA: Carrier Aggregation
- DL: Downlink
- eNB: evolved node B
- gNB: next generation node B
- LTE: Long Term Evolution (aka 4G)
- MAC: Media Access Control
- NBIOT: Narrowband Internet of Things
- NPRACH: NBIOT PRACH
- NR: New Radio, aka 5G
- ORAN: Open Radio Access Network
- PCell: Primary Cell
- PDCCH: physical downlink control channel
- PDCP: Packet Data Convergence Protocol
- PDSCH: Physical Downlink Shared Channel
- PRB: physical resource block
- PRACH: Physical random access channel
- PUCCH: Physical Uplink Control Channel
- PUSCH: Physical Uplink Shared Channel
- RACH: Random access channel
- RAN: Radio Access Network
- RB: resource block
- RAT: Radio access technology
- RE: Resource element
- RLC: Radio Link Control
- RRC: Radio Resource Control
- SCell: Secondary Cell
- SINR: signal-to-interference-plus-noise ratio
- UE: user equipment

## Claims

1. A system for optimizing Physical Uplink Control Channel (PUCCH) Format 3 resource assignment in 4G Radio Access Network (RAN), the system comprising:
i) a Layer 3 (L3) Radio Resource Control (RRC) module configured to selectively configure four PUCCH Format 3 resources for each one of a plurality of user equipments (UEs) which attach or hand-in to a serving cell of the RAN, wherein the L3 RRC module configures the four PUCCH Format 3 resources from a PUCCH Format 3 UE-configuration lookup table structured to balance the number of assignments to each of ten PUCCH Format 3 resources; and
ii) a Layer 2 (L2) Media Access Control (MAC) Scheduler configured to attempt to selectively reserve one of PUCCH Format 1 resource or PUCCH Format 3 resource depending on buffer occupancy (BO) status, wherein a successful reservation of PUCCH Format 3 resource is accompanied by updating an L2 Format 3 Reserved bitmap to track the PUCCH Format 3 resources in a selected Bundling Period.

2. The system according to claim 1, wherein the PUCCH Format 3 UE-configuration lookup table includes at least one set of ten sequential entries, each entry having four resources associated with the entry, and the respective first resource values of the ten sequential entries being configured in sequential ascending order.

3. The system according to claim 2, wherein the PUCCH Format 3 UE-configuration lookup table includes a plurality of sets of ten sequential entries, and in each set of ten sequential entries, each one of ten sequential resource values 1 through 10 is found four times.

4. The system according to claim 2, wherein the L3 RRC module sends to each respective UE an RRC Configuration message including the four configured PUCCH Format 3 resources.

5. The system according to claim 2, wherein, for a UE departing the serving cell of the RAN, the L3 RRC module is configured to make available an entry in the PUCCH Format 3 UE-configuration lookup table associated with the departing UE to another UE.

6. The system according to claim 2, wherein the L2 MAC Scheduler is configured to:
1) in one of each sub-frame or slot, rank both carrier aggregation (CA) UEs and non-CA UEs based on proportional fair scheduling;
2) in the case a candidate UE for scheduling is a CA UE,
i) determine whether Buffer Occupancy (BO) is sufficient to be split to both Primary Cell (PCell) and Secondary Cell (SCell);
a. if the BO is sufficient to be split to both the PCell and the SCell, initiate Physical Uplink Shared Channel (PUSCH) on both the PCell and the SCell, and reserve PUCCH Format 3 resource; and
b. if the BO is insufficient to be split to both the PCell and the SCell, initiate Physical Uplink Shared Channel (PUSCH) on the PCell, and reserve PUCCH Format 1 resource.

7. The system according to claim 6, wherein at least one of:
i) in the case the candidate UE has been previously scheduled with a PUCCH Format 3 resource in a previous downlink (DL) sub-frame in the selected Bundling Period, the PUCCH Format 3 resource from the previous DL sub-frame is used; and
ii) in the case the L2 MAC Scheduler is unable to reserve PUCCH Format 3 resource for the candidate UE, the L2 MAC Scheduler is configured to skip the candidate UE for scheduling and move to a next candidate UE for scheduling, until one of i) no more UEs remain for scheduling, ii) the number of scheduled UEs reaches a specified limit, or iii) no more PUCCH Format 3 resource remains.

8. A method for optimizing Physical Uplink Control Channel (PUCCH) Format 3 resource assignment in 4G Radio Access Network (RAN), the method comprising:
i) configuring, by a Layer 3 (L3) Radio Resource Control (RRC) module, four PUCCH Format 3 resources for each one of a plurality of user equipments (UEs) which attach or hand-in to a serving cell of the RAN, wherein the L3 RRC module configures the four PUCCH Format 3 resources from a PUCCH Format 3 UE-configuration lookup table structured to balance the number of assignments to each of ten PUCCH Format 3 resources; and
ii) attempting to reserve, by a Layer 2 (L2) Media Access Control (MAC) Scheduler, one of PUCCH Format 1 resource or PUCCH Format 3 resource for each UE depending on buffer occupancy (BO) status, wherein a successful reservation of PUCCH Format 3 resource is accompanied by updating an L2 Format 3 Reserved bitmap to track PUCCH Format 3 resources in a selected Bundling Period.

9. The method according to claim 8, wherein the PUCCH Format 3 UE-configuration lookup table includes at least one set of ten sequential entries, each entry having four resources associated with the entry, and the respective first resource values of the ten sequential entries being configured in sequential ascending order.

10. The method according to claim 9, wherein the PUCCH Format 3 UE-configuration lookup table includes a plurality of sets of ten sequential entries, and in each set of ten sequential entries, each one of ten sequential resource values 1 through 10 is found four times.

11. The method according to claim 9, wherein the L3 RRC module sends to each respective UE an RRC Configuration message including the four configured PUCCH Format 3 resources.

12. The method according to claim 9, wherein, for a UE departing the serving cell of the RAN, the L3 RRC module makes available an entry in the PUCCH Format 3 UE-configuration lookup table associated with the departing UE to another UE.

13. The method according to claim 9, wherein the following are performed by the L2 MAC Scheduler:
1) in one of each sub-frame or slot, rank both carrier aggregation (CA) UEs and non-CA UEs based on proportional fair scheduling;
2) in the case a candidate UE for scheduling is a CA UE,
i) determine whether Buffer Occupancy (BO) is sufficient to be split to both Primary Cell (PCell) and Secondary Cell (SCell);
a. if the BO is sufficient to be split to both the PCell and the SCell, initiate Physical Uplink Shared Channel (PUSCH) on both the PCell and the SCell, and reserve PUCCH Format 3 resource; and
b. if the BO is insufficient to be split to both the PCell and the SCell, initiate Physical Uplink Shared Channel (PUSCH) on the PCell, and reserve PUCCH Format 1 resource.

14. The method according to claim 13, wherein at least one of:
i) in the case the candidate UE has been previously scheduled with a PUCCH Format 3 resource in a previous downlink (DL) sub-frame in the selected Bundling Period, the PUCCH Format 3 resource from the previous DL sub-frame is used; and
ii) in the case the L2 MAC Scheduler is unable to reserve PUCCH Format 3 resource for the candidate UE, the L2 MAC Scheduler skips the candidate UE for scheduling and moves to a next candidate UE for scheduling, until one of i) no more UEs remain for scheduling, ii) the number of scheduled UEs reaches a specified limit, or iii) no more PUCCH Format 3 resource remains.

15. The method according to claim 9, wherein in the least one set of ten sequential entries, each one of ten sequential resource values 1 through 10 is found four times.
